Europäisches Patentamt

European Patent Office

Office européen des brevets

(19)

(11) Veröffentlichungsnummer: **0 223 170 B1**

# EUROPÄISCHE PATENTSCHRIFT

(12)

(45) Veröffentlichungstag der Patentschrift: 27.03.91

(51) Int. Cl.⁵: **A01C 15/04**, A01M 7/00

(21) Anmeldenummer: 86115503.4

(22) Anmeldetag: 08.11.86

(54) Verteilmaschine, insbesondere Pneumatikdüngerstreuer.

(30) Priorität: 13.11.85 DE 3540226

(43) Veröffentlichungstag der Anmeldung:
27.05.87 Patentblatt 87/22

(45) Bekanntmachung des Hinweises auf die
Patenterteilung:
27.03.91 Patentblatt 91/13

(84) Benannte Vertragsstaaten:
FR GB

(56) Entgegenhaltungen:
EP-A- 0 085 597      EP-A- 0 146 380
DE-A- 3 439 590      FR-A- 1 558 717
FR-A- 2 433 892      FR-A- 2 559 685

(73) Patentinhaber: Amazonen-Werke H. Dreyer
GmbH & Co. KG
Am Amazonenwerk 9-13
W-4507 Hasbergen-Gaste(DE)

(72) Erfinder: Dreyer, Heinz, Dipl.-Ing.Univ.Dr.agr.
Am Amazonenwerk 7
W-4507 Hasbergen(DE)

Rank Xerox (UK) Business Services

## Beschreibung

Die Erfindung betrifft eine Verteilmaschine, insbesondere Pneumatikdüngerstreuer gemäß des Oberbegriffes des Patentanspruches 1.

Eine derartige Verteilmaschine ist bereits durch die DE-OS 32 04 189 bekannt geworden. Diese Verteilmaschine ist mit einem Vorratsbehälter sowie einem Verteilergestänge, welches den Vorratsbehälter in Arbeitsstellung quer zur Fahrtrichtung um ein Vielfaches der Arbeitsbreite überragt, ausgestattet. Das Verteilergestänge dieser Verteilmaschine ist über als Spannelemente ausgebildete Seile derart am Rahmen der Maschine befestigt, daß es um eine in Fahrtrichtung verlaufende Mittelachse pendelnd aufgehängt ist. Durch diese Art der Aufhängung des Verteilergestänges wird ein einfacher Pendelausgleich für das Verteilergestänge und gleichzeitig eine Dämpfung der Stöße für das Verteilergestänge erreicht.

Es hat sich jedoch in der Praxis gezeigt, daß es nicht ausreicht, einen Pendelausgleich für das Verteilergestänge mit einer um eine in Fahrtrichtung verlaufende Achse vorzusehen.

Nun ist es bereits bei Spritzgestängen, beispielsweise durch die DE-OS 23 58 204 bekannt, daß Spritzgestänge hinter dem Vorratstank der Spritze um eine aufrecht verlaufende Achse pendelnd aufzuhängen, so daß das Spritzgestänge um diese Achse nach vorn bzw. hinten pendeln kann, um so Schlenkerbewegungen des Fahrzeuges auszugleichen. Eine derartige Anbringung des Verteilergestänges hinter dem Vorratsbehälter eines Pneumatikstreuers, wie es beispielsweise durch die DE-PS 34 29 042 bekannt ist, hat jedoch enorme Nachteile bei einem Pneumatikstreuer, da einerseits über aufwendige konstruktive Maßnahmen der Dünger von den Dosierorganen des Vorratsbehälters zu den Injektoren des Verteilergestänges über lange Schlauchleitungen geführt werden muß bzw., daß bei einem Anbau des Vorratsbehälters der Verteilmaschine in die Dreipunktkupplung des Schleppers und das Anordnen des Verteilergestänges hinter dem Vorratsbehälter eine große nachteilige Schwerpunktverlagerung der Verteilmaschine weit hinter dem Schlepper entsteht. Hier wirkt sich der große Abstand bei einer derartigen Konstruktion des Verteilergestänges zum Schlepper nachteilig aus, weil aufgrund des großen Abstandes zwischen dem Schlepper und dem Verteilergestänge sehr große seitliche Bewegungen auf das Verteilergestänge übertragen werden.

Der Erfindung liegt die Aufgabe zugrunde, vor allem für Pneumatikdüngerstreuer, deren Verteilergestänge unterhalb und in seitlicher Verlängerung des Vorratsbehälters angeordnet ist, einen einfachen, kostengünstigen und gut wirksamen Pendelausgleich mit einem äußerst geringen Konstruktionaufwand zu schaffen.

Diese Aufgabe wird erfindungsgemäß durch das Kennzeichen des Patentanspruches 1 gelöst.

Infolge dieser Maßnahme wird es ermöglicht, nicht nur das Verteilergestänge, sondern auch diese Maschine gegenüber die an einem Schlepper oder eines sonstigen selbstfahrenden Fahrzeuges zu montierenden Anbauelemente pendelnd aufzuhängen. Hierdurch werden Schwingungen bzw. Schlenkerbewegungen, die vom Fahrwerk der Maschine bzw. von dem Schlepper hervorgerufen werden, nicht auf die Maschine übertragen, was sich äußerst positiv auf das Streubild auswirkt. Außerdem wirkt sich äußerst günstig aus, daß die aufrechte Achse, um die die gesamte Verteilmaschine mit Vorratsbehälter und Verteilergestänge schwingen kann, sich in der Nähe der Hinterachse befindet, so daß nur sehr kleine seitliche Schlenkerbewegungen des die Verteilmaschine tragenden Schleppers auf die Verteilmaschine einwirken. Somit wird eine äußerst ruhige Lage der Verteilmaschine mit dem Verteilergestänge erreicht. Auch werden so Beschädigungen an der Maschine und dem Verteilergestänge selbst bei äußerst großen Verteilergestängen vermieden, die evtl. durch Schlenkerbewegungen des Schleppers hervorgerufen werden könnten.

In einer Ausführungsform der Erfindung ist erfindungsgemäß vorgesehen, daß die Verteilmaschine Anbauelemente aufweist, die als Pendelrahmen ausgebildet sind, welcher auf seiner Vorderseite Dreipunktkupplungselemente trägt und auf seiner der Maschine zugewandten Seite über zumindest zwei zumindest etwa senkrecht übereinander angeordnete Gelenke mit dem Rahmen der Maschine verbunden ist. Hierdurch wird eine äußerst einfache konstruktive Ausführung des erfindungsgemäßen Gedankens erreicht. Hierbei ist es ohne Probleme möglich, einen derartigen Pendelrahmen auch noch nachträglich an sich bereits in der Praxis befindlichen Maschinen anzuordnen, da dieser Pendelrahmen in der einfachsten Ausführung als Zusatzrahmen vor der gesamten Maschine angeordnet wird. Da dieser Pendelrahmen äußerst kurz baut, ergibt sich praktisch keine ins Gewicht fallende Schwerpunktverschiebung der Verteilmaschine weiter vom Schlepper weg.

Hierbei ist erfindungsgemäß vorgesehen, daß das obere Gelenk, mit dem der Pendelrahmen an der Maschine angeordnet ist, als Kugelgelenk ausgebildet ist. Hierdurch ergibt sich eine sehr kostengünstige Ausbildung dieses Gelenkes. Des weiteren ist es in einfacher Weise möglich, dieses als Kugelgelenk ausgebildete Gelenk in dem oberen Dreipunktkupplungselement der Maschine zu befestigen.

Des weiteren sieht die Erfindung vor, daß das untere Gelenk des Pendelrahmens an einer an dem Rahmen der Maschine angeordneten Quertraverse abgestützt ist. Eine derartige Quertraverse läßt sich sehr leicht an dem Rahmen der Maschine anbringen, so daß sich auch hier eine sehr einfache konstruktive Ausgestaltung ergibt.

Weiterhin ist erfindungsgemäß vorgesehen, daß der Pendelrahmen abnehmbar an der Verteilmaschine angeordnet ist, und daß nach Abnahme des Pendelrahmens an der Quertraverse bzw. am Rahmen der Maschine starre untere Dreipunktkupplungselemente anbringbar sind. Hierdurch ist es in einfachster Weise möglich, eine Grundversion der Verteilmaschine herzustellen und lagermäßig auf Vorrat zu halten, so daß dann wahlweise die Verteilmaschine entweder mit dem Pendelrahmen oder mit starr an der Maschine befestigten Dreipunktkupplungselemente ausgestattet werden kann.

Um die Schwingungsbewegungen der Verteilmaschine zu dämpfen, sind zwischen dem Pendelrahmen und dem Rahmen der Maschine Schwingungsdämpfer angeordnet.

Über dem Pendelrahmen sind die unteren Dreipunktkupplungselemente in Fahrtrichtung beweglich an dem Rahmen der Maschine angeordnet und zwischen den Dreipunktkupplungselementen und dem Rahmen können Schwingungsdämpfer angeordnet sein.

In einer weiteren Ausgestaltung der Erfindung ist es jedoch auch möglich, daß an Stelle eines Pendelrahmens untere Dreipunktkupplungselemente vorgesehen sind, die in Fahrtrichtung gesehen beweglich an dem Rahmen der Maschine befestigt sind.

Des weiteren ist in einer Ausführungsform der Erfindung vorgesehen, daß die Verteilmaschine zusätzlich um eine in Fahrtrichtung verlaufende Achse pendelnd aufgehängt ist. Hierdurch ergibt sich eine quasi Kardanaufhängung der Verteilmaschine an dem die Verteilmaschine ziehenden bzw. tragenden Schlepper. Hierdurch wird erreicht, daß dann sowohl Schwingungsbewegungen um eine aufrechte Achse als auch Pendelbewegungen um eine in Fahrtrichtung verlaufende waagerechte Achse nicht vom Schlepper auf die Verteilmaschine übertragen werden. Mit in die Erfindung soll eingeschossen werden, auch evtl zwischen dem Pendelrahmen und dem Rahmen der Maschine angeordnete Streuelemente, über die die Lage des Pneumatikstreuers zu dem Pendelrahmen bzw. dem Pneumatikstreuer ziehenden Schleppers einstellbar ist, welches bei einseitiger Entleerung des Vorratsbehälters bzw, in Hanglagen von großer Bedeutung ist.

Weitere Einzelheiten der Erfindung sind den übrigen Unteransprüchen, der Beisielsbeschreibung und den Zeichnungen zu entnehmen. Hierbei zeigen

Fig. 1 einen erfindungsgemäß ausgerüsteten Pneumatik streuer mit Pendelrahmen in der Vorderansicht,

Fig. 2 den Pneumatikdüngerstreuer gemäß Fig. 1 in der Ansicht von unten mit Pendelrahmen

Fig. 3 den Pendelrahmen in der Ansicht von vorne,

Fig. 4 den Pendelrahmen gemäß Fig. 3 in der Seitenansicht,

Fig. 5 den Pendelrahmen in der Ansicht V - V,

Fig. 6 den Pneumatikstreuer gemäß Fig. 1 ohne Pendelrahmen in der Ansicht von vorne,

Fig. 7 eine an einem Pneumatikdüngerstreuer angeordneten Pendelrahmen anderer Ausführung in der Ansicht von vorne,

Fig. 8 den Pendelrahmen gemäß Fig. 7 an einem Pneumatikdüngerstreuer in der Seitenansicht,

Fig. 9 den an einem Pneumatikstreuer angeordneten Pendelrahmen in der Ansicht IX - IX und

Fig. 10 den Pendelrahmen gemäß Fig. 7 in der Vorderansicht.

Die Verteilmaschine ist als Pneumatikdüngerstreuer ausgebildet. Der Pneumatikdüngerstreuer weist den Vorratsbehälter 1 sowie das Verteilergestänge 2 auf, welches den Vorratsbehälter 1 quer zur Fahrtrichtung um ein Vielfaches der Breite des Vorratsbehälters 1 überragt. An dem Rahmen 3 des Pneumatikdüngerstreuers ist der Pendelrahmen 4 angeordnet. Der Pendelrahmen 4 weist auf seiner Vorderseite das obere Dreipunktkupplungselement 5 und die beiden unteren Dreipunktkupplungselemente 6 auf, über die der Pendelrahmen 4 an eine Dreipunkthubeinrichtung eines Schleppers angebaut werden kann. Der Pendelrahmen weist auf seiner dem Vorratsbehälter 1 zugewandten Seite die beiden übereinander angeordneten Gelenke 7 und 8 auf, mit denen der Pendelrahmen 4 an dem Rahmen 3 des Pneumatikdüngerstreuers angeordnet ist. Die beiden Gelenke 7 und 8 sind senkrecht übereinander angeordnet. Das obere Gelenk 7 ist als Kugelgelenk ausgebildet und in der Doppellasche 9, die an dem Rahmen 3 befestigt ist, mittels eines Bolzens angeordnet. Diese Doppellasche 9 ist das obere Dreipunktkupplungselement einer normalen Dreipunktkupplung.

Der Rahmen 3 des Pneumatikdüngerstreuers weist die untere Quertraverse 11 auf, an der das untere Gelenk 8, mit dem der Pendelrahmen 4 angelenkt ist, angeordnet ist. Zwischen dem Pendelrahmen 4 und der unteren Quertraverse 11 sind die Schwingungsdämpfer 12 angeordnet. Weiterhin sind zwischen der Quertraverse 11 und dem Pendelrahmen 4 die Anschläge 13, die elastische Gummipuffer sind, angeordnet. Durch das obere Gelenk 7 und das untere Gelenk 8, mit denen der Pendelrahmen 4 an dem Rahmen 3 des Pneumatikdüngerstreuers angeordnet ist, verläuft die senkrechte Pendelachse 14. Der Pneumatikdüngerstreuer kann jeweils um etwa 15° zu jeder Seite pendeln.

Um nun noch evtl. eine Pendelmöglichkeit des gesamten Pneumatikdüngersteuers um eine waagerechte und in Fahrtrichtung durch das Kugelgelenk 7 verlaufende Achse zu ermöglichen, ist es möglich, daß das untere Gelenk 8 derart ausgebildet ist, daß es eine Schwenkmöglichkeit des Pneumatikdüngerstreuers gegenüber dem Pendelrahmen 4 um diese Achse ermöglicht.

Der Pendelrahmen 4 weist in seiner Mitte den Durchbruch 15 auf, damit durch diesen Durchbruch 15 die Gelenkwelle, die zwischen der Schlepperzapfwelle und der Antriebswelle 16 des Pneumatikdüngerstreuers angeordnet ist, geführt werden kann. Hierbei ist der Durchbruch 15 so groß ausgebildet, daß die durch diesen Durchbruch 15 geführte Gelenkwelle nicht an den Pendelrahmen anstößt, wenn der Pneumatikstreuer angehoben bzw. abgesenkt wird.

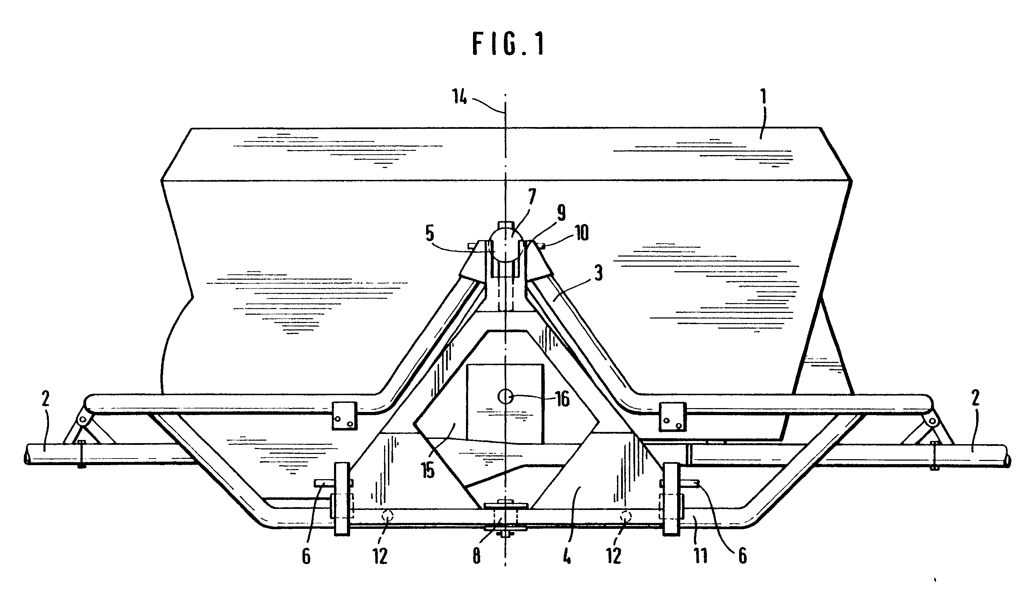

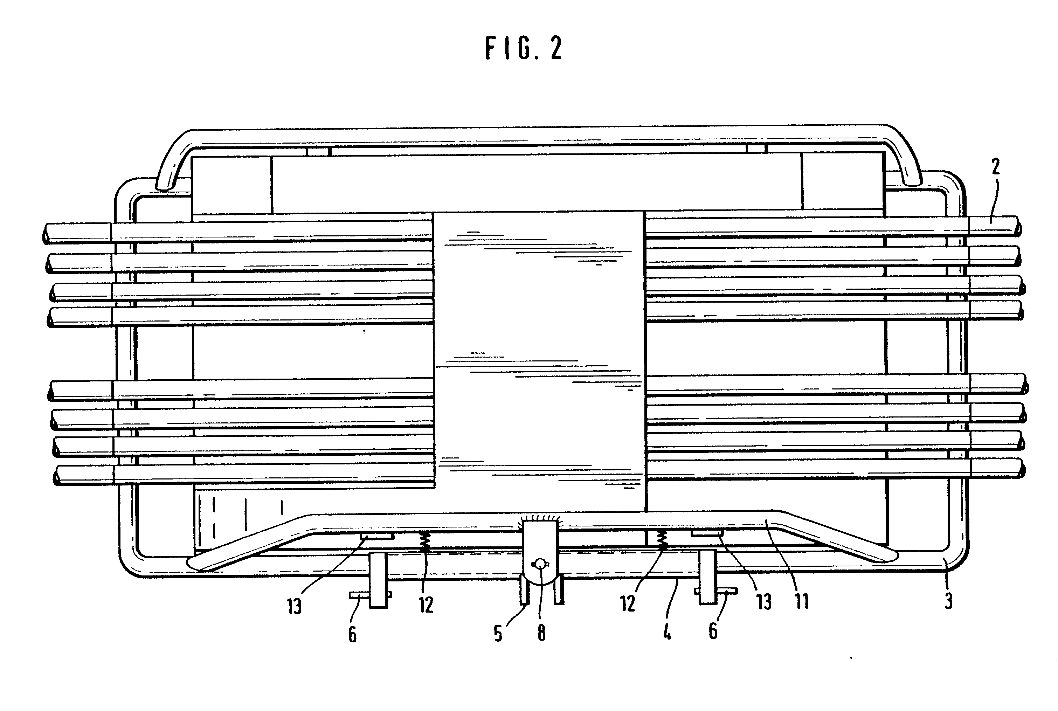

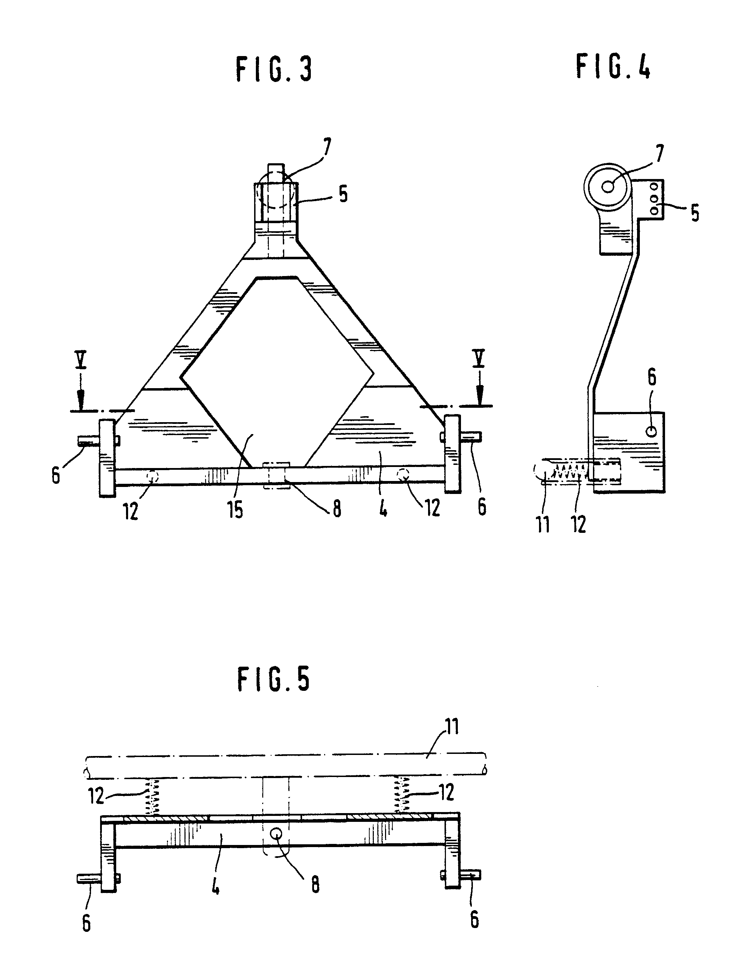

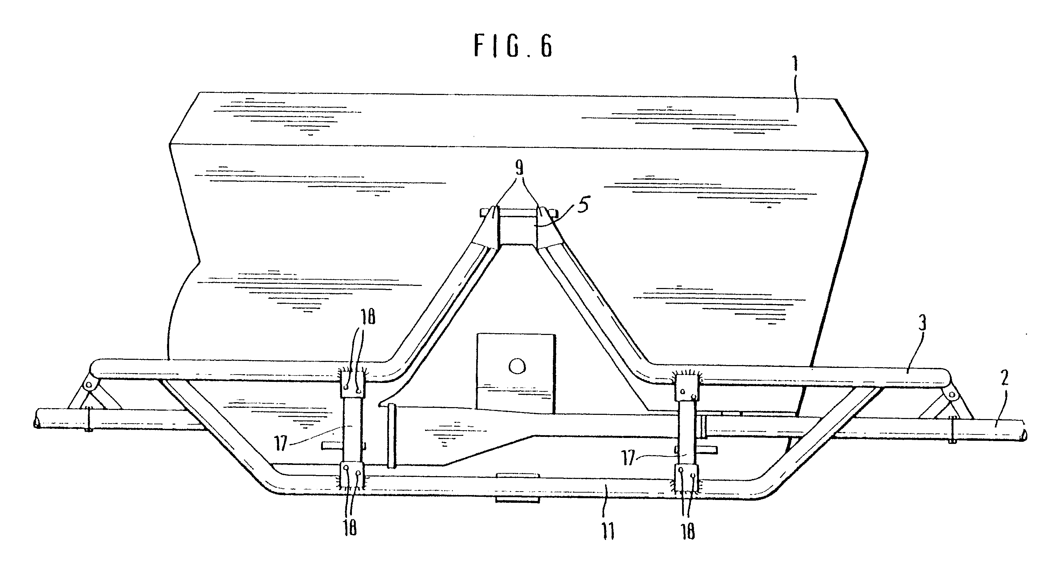

Der Pendelrahmen, der in den Fig. 1 bis 5 dargestellt ist, ist abnehmbar an dem Pneumatikdüngerstreuer angeordnet. Bei dem Pneumatikdüngerstreuer gemäß Fig. 6 ist der Pendelrahmen 4 abgenommen. Nach der Abnahme des Pendelrahmens 4 sind zwischen der Quertraverse 11 und dem Rahmen 3 des Pneumatikdüngerstreuers die beiden starren unteren Dreipunktkupplungselemente 17 mit den Schraubbolzen 18 angeordnet. Somit kann also der Pneumatikdüngerstreuer nach Abnahme des Pendelrahmens über die als Doppellasche 9 ausgebildete obere Dreipunktkupplungselemente und die unteren Dreipunktkupplungselemente 17 an einen Schlepperkraftheber angebaut werden, ohne daß eine Pendel- bzw. Schwingungsmöglichkeit des Pneumatikdüngerstreuers gegenüber dem Schlepper besteht. Andererseits ist es jedoch auch möglich, nach Abnahme der unteren starren Dreipunktkupplungselemente 17 wiederum den Pendelrahmen 4 vor dem Pneumatikdüngerstreuer in der oben beschriebenen Weise anzuordnen, so daß der Pneumatikdüngerstreuer gegenüber dem Pendelrahmen pendeln bzw. schwingen kann.

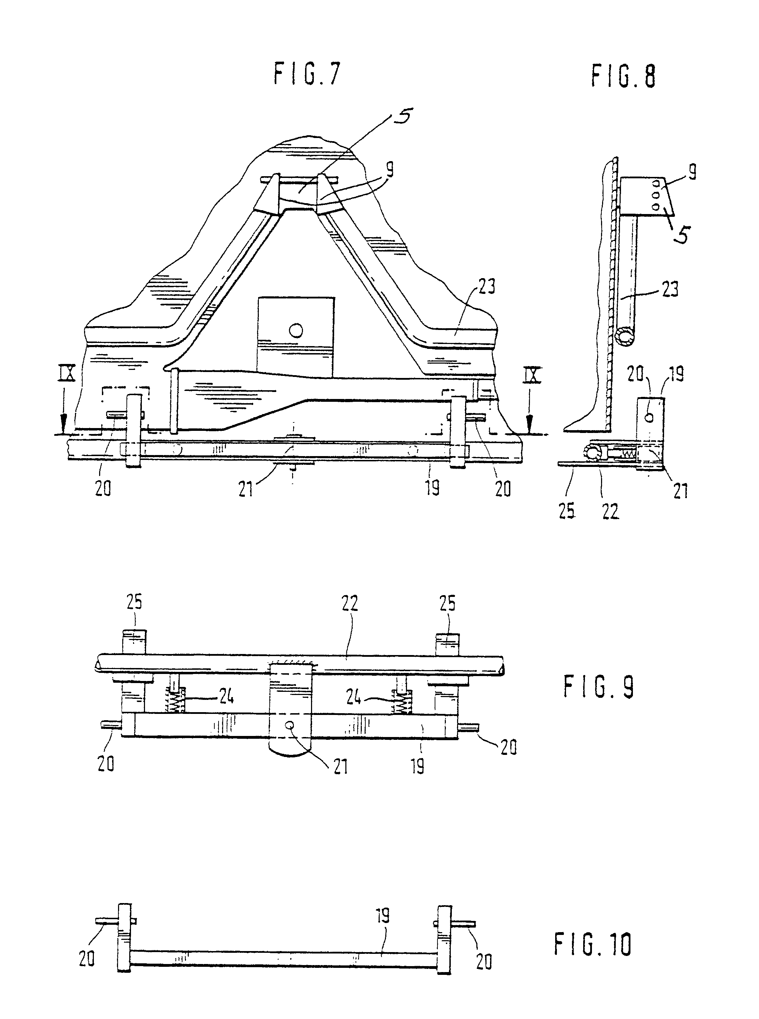

Bei dem Pneumatikdüngerstreuer gemäß den Fig. 7 bis 10 ist der Pendelrahmen 19 mit den unteren Dreipunktkupplungselementen 20 mittels des Gelenkes 21 an der Quertraverse 22, die an dem Rahmen 23 des Pneumatikdüngerstreuers befestigt ist, angeordnet. Durch das Gelenk 21 verläuft die aufrechte Achse um die der Pneumatikdüngerstreuer gegenüber dem Pendelrahmen 19 pendeln kann. Zwischen dem Pendelrahmen 19 und der Quertraverse 22 sind die Schwingungsdämpfer 24 angeordnet. Weiterhin sind an dem Pendelrahmen 19 die unter die Quertraverse 22 fassenden Gleitstücke 25 angeordnet, die dafür sorgen, daß der Pendelrahmen 19 nicht um eine in Fahrtrichtung verlaufende Achse gegenüber dem Pneumatikdüngerstreuer zu stark pendelt.

## Ansprüche

1. Verteilmaschine, insbesondere Pneumatikdüngerstreuer zum Ausbringen von insbesondere körnigem Material, die als Anbaumaschine zum Anbau an einen Schlepper ausgebildet ist und aus einer Maschine mit einem zentralen Vorratsbehälter (1) sowie einem Verteilergestänge (2), welches den Vorratsbehälter (1) quer zur Fahrtrichtung um ein Vielfaches der Breite des Vorratsbehälters (1) seitlich überragt, und sich unterhalb des Vorratsbehälters befindet, und Anbauelemente (4, 19) zum Anbau an einen Schlepper besteht, dadurch gekennzeichnet, daß die Maschine gegenüber den Anbauelementen (4, 19) um eine aufrecht verlaufende Achse (14) pendelnd aufgehängt ist.

2. Verteilmaschine nach Anspruch 1, dadurch gekennzeichnet, daß die Verteilmaschine jeweils um etwa 15° in Bezug auf die Anbauelemente (4, 19) zu jeder Seite pendeln kann.

3. Verteilmaschine nach Anspruch 1, dadurch gekennzeichnet, daß die Maschine einen Pendelrahmen (4,19) aufweist, der auf seiner Vorderseite Dreipunktkupplungselemente (5,6) trägt und auf seiner der Maschine zugewandten Seite über zumindest zwei zumindest etwa senkrecht übereinander angeordnete Gelenke (7,8) mit dem Rahmen (3) der Maschine verbunden ist.

4. Verteilmaschine nach Anspruch 3, dadurch gekennzeichnet, daß das obere Gelenk (7) als Kugelgelenk ausgebildet ist.

5. Verteilmaschine nach Anspruch 4, dadurch gekennzeichnet, daß das obere Gelenk (7) in der oberen Dreipunktkupplung (9) des Ramens (3) der Maschine befestigt ist.

6. Verteilmaschine nach Anspruch 3, dadurch gekennzeichnet. daß das untere Gelenk (8) an einer an dem Rahmen (3) der Maschine angeordneten Quertraverse (11) sich abstützt.

7. Verteilmaschine nach Anspruch 3, dadurch gekennzeichnet, daß der Pendelrahmen (4) abnehmbar an der Verteilmaschine angeordnet ist, und daß nach Abnahme des Pendelrahmens (4) an der Quertraverse (11) bzw. am Rahmen der Maschine starre untere Dreipunktkupplungselemente (17) anbringbar sind.

8. Verteilmaschine nach Anspruch 3, dadurch gekennzeichnet, daß zwischen dem Pendelrahmen (4) und dem Rahmen (3) der Maschine Schwingungsdämpfer (12) angeordnet sind.

9. Verteilmaschine nach Anspruch 1, dadurch gekennzeichnet, daß die unteren Dreipunktkupplungselemente (6,20) in Fahrtrichtung beweglich an dem Rahmen (3,23) der Maschine angeordnet sind, und daß zwischen den Dreipunktkupplungselementen (6,24) und dem Rahmen (3,23) der Maschine Schwingungsdämpfer (12,24) angeordnet sind.

10. Verteilmaschine nach Anspruch 1, dadurch gekennzeichnet, daß die Verteilmaschine zusätzlich um eine in Fahrtrichtun verlaufende Achse pendelnd aufgehängt ist.

11. Verteilmaschine nach Anspruch 3 und 10, dadurch gekennzeichnet, daß das untere Gelenk des Pendelrahmens quer zur Fahrtrichtung verschiebbar angeordnet ist.

12. Verteilmaschine nach Anspruch 1, dadurch gekennzeichnet, daß Anschläge (13) die Pendelbewegung begrenzen.

**Claims**

1. A distributing machine, more especially a pneumatic fertilizer distributor for distributing granular material in particular, which machine is in the form of an attachable machine for attachment to a tractor and includes a central hopper (1) as well as a distribution tube assembly (2), which protrudes laterally beyond the hopper (1) transversely relative to the direction of travel by an amount corresponding to a multiple of the width of the hopper (1) and is situated beneath the hopper, and attachment means (4, 19) for attachment to a tractor, characterised in that the machine is mounted so as to pivot relative to the attachment means (4, 19) about a vertical axis (14).

2. Distributing machine according to claim 1, characterised in that the machine can pivot through substantially 15° relative to the respective attachment means (4, 19) at each side.

3. Distributing machine according to claim 1, characterised in that the attachment means (4, 19) is in the form of a pivotable frame, and in that the latter is provided on its front end with three-point coupling elements (5, 6) and is connected to the frame (3) of the machine at its end facing the machine through the intermediary of at least two joints (7, 8), which are disposed at least substantially vertically one above the other.

4. Distributing machine according to claim 3, characterised in that the upper joint (7) is in the form of a ball joint.

5. Distributing machine according to claim 4, characterised in that the upper joint (7) is secured in the upper three-point coupling (9) of the frame (3) of the machine.

6. Distributing machine according to claim 3, characterised in that the lower joint (8) is supported on a cross-piece member (11), which is disposed on the frame (3) of the machine.

7. Distributing machine according to claim 3, characterised in that the pivotable frame (4) is detachably disposed on the distributing machine, and in that, after detachment of the pivotable frame (4), rigid, lower three-point coupling elements (17) are mountable on the cross-piece member (11) or that is to say on the frame of the machine.

8. Distributing machine according to claim 3, characterised in that vibration dampers (12) are disposed between the pivotable frame (4) and the frame (3) of the machine.

9. Distributing machine according to claim 1, characterised in that the lower three-point coupling elements (6, 20) are disposed on the frame (3, 23) of the machine so as to be displaceable in the direction of travel, and in that vibration dampers (12, 24) are disposed between the three-point coupling elements (6, 24) and the frame (3, 23) of the machine.

10. Distributing machine according to claim 1, characterised in that the distributing machine is mounted so as to be additionally pivotable about an axis which extends in the direction of travel.

11. Distributing machine according to claims 3 and 10, characterised in that the lower joint of the pivotable frame is disposed so as to be displaceable transversely relative to the direction of travel.

12. Distributing machine according to claim 1, characterised in that stop members (13) define the pivotal movement.

**Revendications**

1. Epandeur notamment distributeur pneumatique d'engrais pour distribuer en particulier des produits en granulés, distributeur conçu comme machine destinée à être montée sur un tracteur et se composant d'une trémie d'alimentation (11) centrale ainsi que d'une tringlerie d'épandage (2) qui dépasse de la trémie (1) de plusieurs fois la largeur de la trémie (1) transversalement par rapport à la direction de déplacement et se trouve en-dessous de la trémie ainsi que des éléments (4, 19) destinés à être montés sur un tracteur, caractérisé en ce que l'épandeur est suspendu de manière oscillante autour d'un axe vertical (14) par rapport aux éléments de montage (4, 19).

2. Epandeur selon la revendication 1, caractérisé en ce qu'il peut pivoter respectivement d'environ 15° par rapport aux éléments de montage (4, 19) et cela de chaque côté.

3. Epandeur selon la revendication 1, caractérisé en ce que les éléments de montage (4, 19) sont réalisés sous la forme d'un châssis oscillant portant sur sa face avant les éléments d'attelage en trois points (5, 6) et sur son côté tourné vers l'épandeur, au moins deux articulations (7, 8) sensiblement verticales l'une par rapport à l'autre assurant la liaison avec le châssis (3) de l'épandeur.

4. Epandeur selon la revendication 3, caractérisé en ce que l'articulation supérieure (7) est une articulation à rotule.

5. Epandeur selon la revendication 4, caractérisé en ce que l'articulation supérieure (7) est fixée à l'élément supérieur (9) de l'attelage du châssis (3) de l'épandeur.

6. Epandeur selon la revendication 3, caractérisé en ce que l'articulation inférieure (8) s'appuie sur une traverse (11) prévue sur le châssis (3) de l'épandeur.

7. Epandeur selon la revendication 3, caractérisé en ce que le châssis oscillant (4) est monté de manière amovible sur l'épandeur et en ce qu'après enlèvement du châssis oscillant (4), on fixe sur la traverse (11) ou le châssis de l'épandeur, des éléments non articulés (17) d'attelage en trois points.

8. Epandeur selon la revendication 3, caractérisé par des amortisseurs (12) montés entre le châssis oscillant (4) et le châssis (3) de l'épandeur.

9. Epandeur selon la revendication 1, caractérisé en ce que les éléments inférieurs d'attelage en trois points (6, 20) sont montés sur le cadre (3, 23) de l'épandeur, de manière mobile dans la direction de déplacement et en ce qu'entre les éléments d'attelage en trois points (6, 24) et le châssis (3, 23) de la machine, on a des amortisseurs (12, 24).

10. Epandeur selon la revendication 1, caractérisé en ce qu'il est en outre suspendu de manière oscillante autour d'un axe parallèle à la direction de déplacement.

11. Epandeur selon la revendication 3 et 10, caractérisé en ce que l'articulation inférieure du châssis oscillant peut coulisser transversalement à la direction de déplacement.

12. Epandeur selon la revendication 1, caractérisé en ce que des butées (13) limitent le mouvement pendulaire.

FIG.1

FIG. 2

# FIG. 3

# FIG. 4

# FIG. 5

FIG.6

EP 0 223 170 B1

FIG.7

FIG.8

FIG.9

FIG.10